# EUROPEAN PATENT SPECIFICATION

(11) **EP 0 471 776 B1**
(45) Date of publication and mention of the grant of the patent: **20.07.1994**
(21) Application number: 90908319.8
(22) Date of filing: 10.05.1990
(51) Int. Cl.: B65D 73/02, F16B 15/08, F16B 27/00

(54) **PACKAGING UNIT CONTAINING SCREWS, NAILS OR LIKE FASTENERS**
VERPACKUNGSEINHEIT MIT SCHRAUBEN, NÄGELN ODER ÄHNLICHEN BEFESTIGUNGSMITTELN
UNITE D'EMBALLAGE CONTENANT VIS, CLOUS, OU AUTRES ELEMENTS DE FIXATION

(30) Priority: 11.05.1989 SE 8901683
(43) Date of publication of application: 26.02.1992
(73) Proprietor: MICKOS, Kaj, S-131 46 Nacka (SE)
(72) Inventor: MICKOS, Kaj, S-131 46 Nacka (SE)
(74) Representative: Nilsson, Karl Ingvar
(86) International application number: SE9000314
(87) International publication number: WO9013493

(56) References cited:
- EP-A- 0 320 186
- FR-A- 2 168 423
- GB-A- 1 429 455
- SE-C- 118 344
- US-A- 2 881 911
- US-A- 3 031 670
- US-A- 3 067 424

## Description

The present invention relates to a package containing screws, nails or similar fasteners and which is of the type set forth in the preamble of the following claim.

When handling different fasteners, e.g. screws for wall-erection or wall-construction in building work, it is beneficial if the method of packaging applied allows all fasteners to be orientated in one and the same direction, thus increasing speed of fastener insertion and minimizing spillage.

It is also an advantage if handling of the fasteners can be minimized to the greatest possible extent, so as to avoid the risk of allergic reaction which may occur from physical contact with nickel-plated or chromium-plated screws.

The ability to handle fasteners without physical contact therewith also prevents injury to the worker's fingers caused by pricks from screwpoints and sharp metal flashes or chips remaining on the fasteners subsequent to manufacture.

At present, two main types of packages prevail:
I) Cartons or boxes containing single fasteners (e.g. screws) which the worker must pick from the carton or box and manually orientate before insertion, a procecure associated with the aforementioned hazards, notably orientation, spillage, allergic reaction, injuries to fingers and low fastener-insertion speeds. Moreover, dropped fasteners are likely to pierce through the shoes of the worker and injure his/her feet, and also to pierce and damage the tyres of any vehicle and transport equipment that may be in the vicinity.
II) The other type of packaging commonly used is designed for fastener-insertion which, in some respect, can be referred to as automatic. This type of package is usually in strip form, with the fasteners orientated in one and the same direction and in mutually spaced relationship. This type of package can only be used together with those types of automatic screw tighteners or nailing machines for which they are specifically designed. For example, the fasteners cannot be removed individually from the package for insertion into a structure surface with the aid of a conventional screw driver.

A fastener package of this type is shown in the USA patent 3 031 670. The upper portions of the fasteners are received in pockets formed by a narrow holder comprising two parallel flat side pieces of fibrous material having between them a fibrous web of corrugated material. The package is advantageous for use with a fastener driving tool which removes the leading fastener and those that follow it one at a time by driving them or otherwise forcing them axially downwardly through the package. The flat side pieces and the corrugated web are forced apart by the head of the fastener and - therefore - are narrow in order not to present a too high resistance to the driving of the fasteners through the package. Hence, the package cannot be held in one hand while forcing fasteners down through the package with the aid of a hand-held screw-tightener without physical contact with the fasteners and a risk for injuries to the operator's fingers.

A different type of package comprising similar flat and corrugated strips of paper is shown in the USA patent 2 881 911. Electric components with protruding leads are packed totally exposed with only the leads positioned in the pockets. The components can be removed laterally but are not intended to be removed axially.

The present invention combines the two first-mentioned packages in one single package, allowing both non-handling removal of orientated fasteners or items and automatic feeding of the fasteners in automatic screw tighteners or nailing machines or the like.

This is achieved in accordance with the invention with a package having the characterizing features set forth in the following claim. The package has the form of a strip made of paper, plastic or any other appropriate material. The strip is provided with transverse compartments or pockets in which the fasteners are placed. The fasteners are neither glued, moulded nor by other means attached to the strip, but are held in place by the surrounding pressure of the compartment walls. The package is configured in such a way that each compartment is provided on one side of the strip with a slot which extends in the longitudinal direction of the compartment. When the strip is in a normal position, i.e. straight, the slot is closed. When bending the strip, the slot will widen at the same time as pressure from the compartment walls ceases, thus allowing a fastener to be removed or released from the package. The sloping compartment walls, diverging towards the slot, facilitate removal of the fastener even when the strip is moderately bent or not bent at all.

The distinctive quality of the package of being able to open and close around the fastener with great precision and at high speed, allows not only both manual and automatic handling of fasteners but also provides an opportunity of designing improved automatic screw tighteners and packaging machines.

The invention will now be described in more detail with reference to the accompanying drawings which illustrate an exemplifying embodiment of the invention and in which
Figure 1 illustrates a coiled package loaded with screws;
Figure 2 illustrates part of a screw-loaded strip; and
Figure 3 is a cross-sectional view of a curved package loaded with two screws.

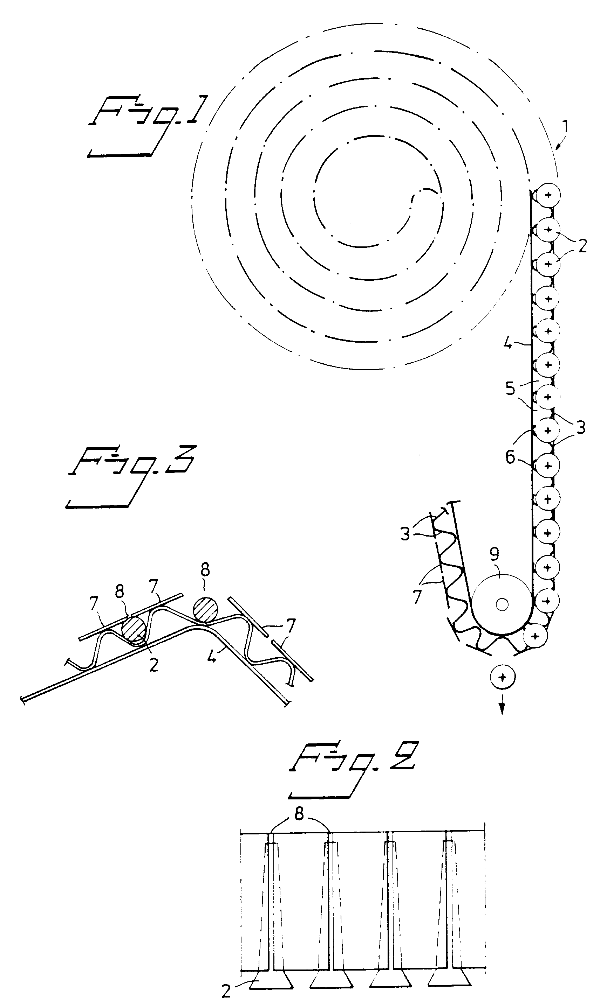

The drawing illustrates a package (strip) 1 which in the illustrated case is loaded with screws 2. The strip comprises transverse compartments comprising diagonal partitions 3 attached to a supporting strip 4 in manner such that every other compartment is a blind compartment 5 and every other compartment a packaging compartment 6. The packaging compartments are covered by lids 7 which are attached to the tops of the blind compartments and which, in the "roof" of the packaging compartments, form slots 8 which extend in the longitudinal direction of the compartment. When the strip is straight, the compartment slots are closed and the elastic or resilient partitions 3 between blind and packaging compartments press against the screw 2 and hold it in place. When the strip is bent, e.g. around an axis 9, the slot 8 will widen and cause the screw to fall out. The sloping walls 3 of the packaging compartments widen towards the slot 8, thus facilitating pressing of screws from the strip. It should be noted, however, that when using the inventive package to advance screws to a hand-held screw-tightener, it is intended that the strip and screws carried thereby shall be held in one hand while pressing screws from the package, one after the other, with the aid of the screw-tightener. The screws will therefore not come into contact with the fingers at all, which is highly advantageous and explains why work is carried out at an unbelievably high speed in comparison with packages with which screws must be picked losely therefrom.

## Claims

1. A package containing screws (2), nails or like fasteners, comprising two outer, elongated and mutually parallel strips (4,7) and an intermediate, corrugated strip (3) with the crests of the corrugations connected to the outer strips (4,7) such as to form compartments (6), **characterized** in that said fasteners are accommodated in alternate compartments such that one strip (7) of said outer strips forms an outer wall in each of the fastener-accommodating compartments, that at least the outer strips (4,7) have a width which is substantially equal to the lengths of the fasteners (2) from one axial extremity to the other, and in that each of said outer walls of the fastener containing compartments (6) has provided therein a slot (8) which extends in the cross-direction of the strip (7).

## Patentansprüche

1. Verpackungseinheit mit darin befindlichen Schrauben (2), Nägeln oder anderen derartigen Befestigungsmitteln, die zwei äußere glatte, zueinander parallele Streifen (4,7) und ein zwischen diesen Streifen befindliches Wellenband (3) aufweist, wobei das Wellenband in den Bereichen der Wellenkuppen mit einem der beiden Streifen (4,7) verbunden ist, so daß aufeinanderfolgende Kammern (5,6) gebildet sind, **dadurch gekennzeichnet**, daß jedes Befestigungsmittel (2) sich in je einer Befestigungsmittelaufnahme (6) zwischen zwei Leerkammern (5) befindet, die von den beiden Streifen (4,7) abgedeckt ist, wobei zumindest diese Streifen eine Breite haben, die der Länge der Befestigungsmittel (2) zwischen deren Enden entspricht, wobei der eine (7) der glatten Streifen (4,7) in den Bereichen zwischen je zwei Wellenkuppen zu beiden Seiten einer Befestigungsmittelaufnahme (6) durch einen Schlitz (8) unterbrochen ist, der sich in der Querrichtung des Streifens (7) erstreckt und in Länge und Anordnung dem Befestigungsmittel (2) entspricht.

## Revendications

1. Un emballage contenant des vis (2), des clous ou des éléments de fixation analogues, comprenant deux bandes externes allongées et mutuellement parallèles (4, 7) et une bande intermédiaire ondulée (3) avec les crêtes des ondulations reliées aux bandes externes (4, 7) de manière à former des compartiments (6), **caractérisé** en ce que lesdits éléments de fixation sont montés dans des compartiments alternés de telle manière qu'une bande (7) parmi lesdites bandes externes constitue une paroi externe dans chacun des compartiments de montage des éléments de fixation, en ce qu'au moins les bandes externes (4, 7) présentent une largeur qui est sensiblement égale à la longueur des éléments de fixation (2) d'une extrémité axiale à l'autre, et en ce que chacune desdites parois externes de l'élément de fixation contenant des compartiments (6) présente une fente (8) qui s'étend dans la direction transversale de la bande (7).
